# EUROPEAN PATENT APPLICATION

(11) **EP 0 940 810 A1**
(43) Date of publication of application: **08.09.1999**
(21) Application number: 98103805.2
(22) Date of filing: 04.03.1998
(51) Int. Cl.: G11B 20/00, G11B 23/28, G06K 19/06

(54) **Recording medium with copyright protection features**

(71) Applicant: Nagashio, Kichinosuke, Tokyo (JP)
(72) Inventor: Nagashio, Kichinosuke, Tokyo (JP)
(74) Representative: Kiliaridis, Constantin

(57) **Abstract**

A copy protected recording medium (1) comprises a readable medium containing data encrypted according to at least one encryption method. A geometric box code (2) identifying the encryption method or methods used is associated with the readable medium by, for example, printing the geometric code onto the medium. The geometric code comprises at least one planer geometric figure formed by a plurality of lines, each of the lines encoding a bit of data by being either in an unbroken continuous state or in a broken discontinuous state, where each of the broken and the unbroken states correspond to one of the standard on/off digital states.

## Description

### BACKGROUND OF THE INVENTION

The present invention relates to a technology for protecting copyrights by preventing the illegal copying and duplication of the contents of various types of media such as music Compact Discs "CD"s, Digital Video Discs "DVD"s containing long-playing movies, Compact Disc Read Only Memories "CD-ROM"s containing data, Digital Video Disc Read Only Memories "DVD-ROM"s, re-writable Digital Video Disc Random Access Memories "DVD-RAM"s, and Digital Video Disc Recordable "DVD-R".

The use of CDs as a music source has had a history of shorter than twenty years, but at present this medium has completely overtaken other media such as vinyl records and cassette tapes. A principal reason that music CDs have bep-1Xome so overwhelmingly popular in such a short span of time is that the CD is an excellent medium for digital data. An important feature inherent to a digital format medium is that its contents are free from the noise and distortion that have been unavoidable in analog format media, thus allowing easy enjoyment of high-quality music

Further, unlike record players and the like, in a CD there is no contact of the recorded medium with the pickup. Thus, wear and tear on the CD medium is reduced. The overall design can be made more compact, thus making the CD media easier to use. Compared to the serial access of cassette tapes, individual tracks can be selected easier by a random access, thus making the CD media more convenient to operate.

Besides these factors, it is also believed that the accelerated development, both in terms of hardware and software, of CDs and their related media -- CD-ROMs, CD-Rs, video-CDs, and the like -- is rooted in the fact that unlike many other electronic media, CDs have early on been used according to a set of unified international standards.

The standard for audio application is known as the Red Book standard. Besides their use in the audio world, CD media now include uses that are practiced under other various international standards in the field of computer-related electronic publishing and the like. Such standards include the Yellow Book standard for CD-ROMs, and the Orange Book standard for CD-R and Photo-CDs (Kodak Corp.).

Traditional computer storage media such as floppy disks have reached their limits and are often inadequate in their storage capacity in the face of the ever increasing storage requirements. Such massive storage are caused by the expansion in size of computer software and the requirements of storing other types of data such as multimedia images. Thus, the CD, with its large capacity of 650 MB, its low production costs, and its easy data access, has become the dominant external memory device.

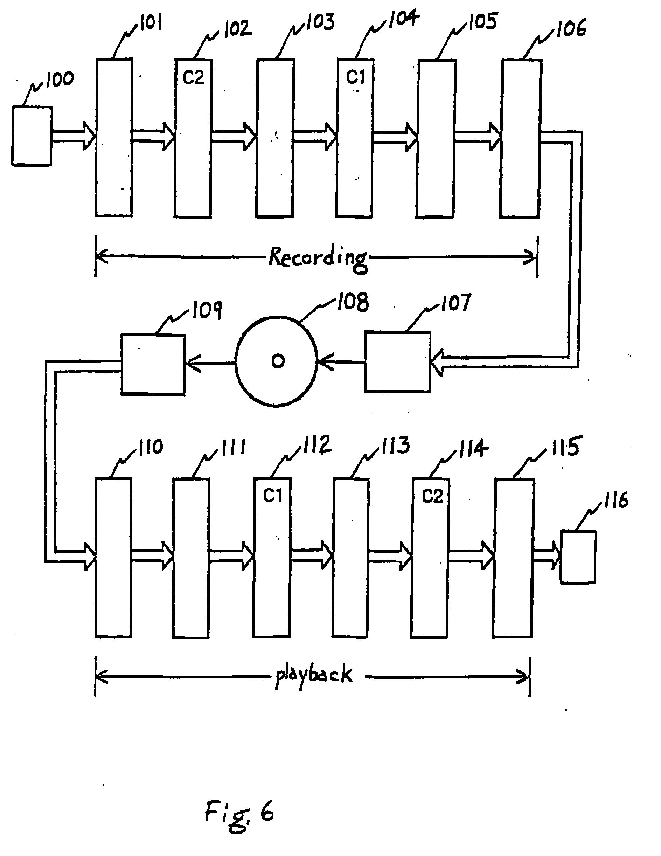

Referring to Fig. 6, there is shown a diagram for the purpose of describing the main elements of the signal processing system used in a conventional CD. This diagram shows the Cross Interleave Reed-Solomon Code "CIRC" error correction, a form of error correction specifically for CDs in which two levels of Reed-Solomon coding, C1 and C2, are interleaved together. The signal processing system includes feeding an input signal 100 to a recording system which includes the sections 101 to 106. The recording process includes feeding input signal 100 to a scrambling section 101, a C2 encoding section 102, an interleaving section 103, an encoding section 104, an odd-numbered delay section 105, a reverse parity section 106, an EFM modulation with synchronization section 107, thus forming a disc 108 that can be played back by feeding the playback signal from a detecting synchronization EFM demodulation section 109 to a playback system that includes sections 110 to 115. The playback system includes an even-numbered delay section 110, a reverse parity section 111, a C1 decoding section 112, a de-interleaving section 113, a C2 decoding section 114, and a descrambling section 115. The playback signal is fed to each section in turn to yield a digital audio data output 116.

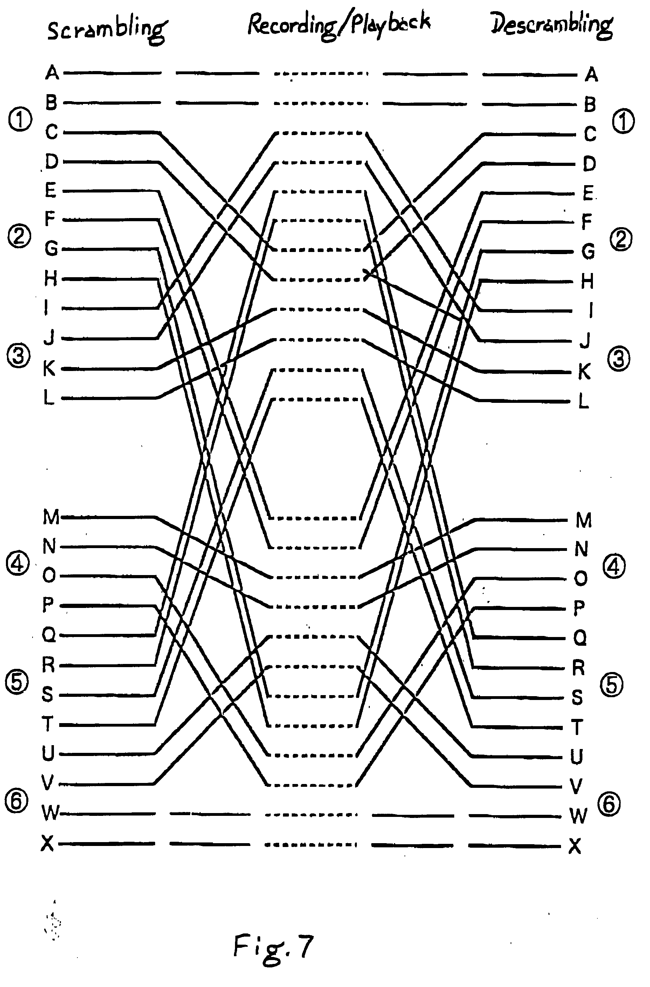

Thus the error correction is separated between the recording system and the playback system. The digital audio data input is initially scrambled by scrambling section 101. In this case, the scrambling uses a very simple encryption method involving transpositions. Referring to Fig. 7, there is shown a diagram for the purpose of describing the scrambling process. Six samples from the left and right channels are shown from the digital audio data input, with the first sample being ABCD, with AB (L) and CD (R); the second sample being EFGH, with EF (L) and GH (R); and so on.

From this input data, even-numbered ample 2 is offset according to a key of "two CIRC units", i.e. the samples 2, 5 ... are handled. Thus, in sample 2, EF (L) is shifted to the position of MN (L) of sample 4, and GH (R) of sample 2 is shifted to the ST (R) position, which is two units away from the position to which EF (L) is shifted. Thus, scrambling is performed by rearranging each element of data through preset delays.

The recording system performs CIRC operations on the scrambled digital data such as interleaving and one-frame delays of odd symbols. The results are then written to disk. The playback system takes the data reproduced from an optical pickup and performs the operations of the recording system in reverse. In this case, a descrambler uses the corresponding "CIRC units x 2" as the scambling decoding key. Referring to Fig. 7 (the right side of the drawing), the output results in the same ordering of the digital data as the originally inputted data. The scrambling performed here is partly for the purpose of maintaining security of the data in the sense of preventing a dropout of a data element from causing an extended dropout of audio data, but mainly for lengthening the interpolation distance in error-correction operations. Thus, the main objective is not security but to provide smooth signal processing for CIRC operations.

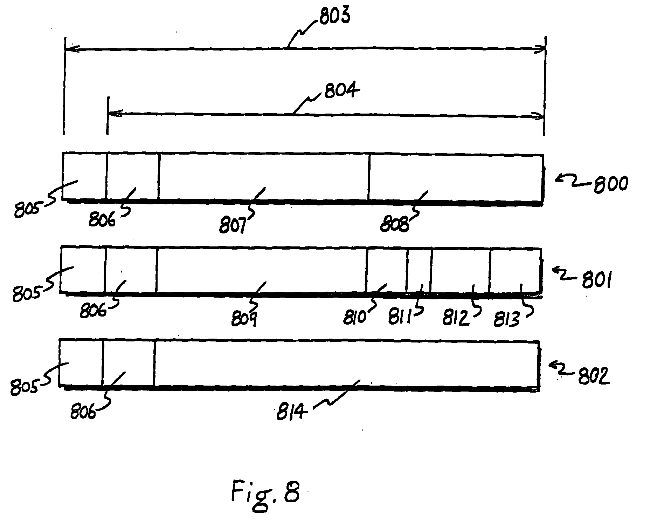

Referring to Fig. 8, there is shown the various formats of a CD-ROM according to the international standard set forward in the Yellow Book standards, the standard for CD-ROMs. The Yellow Book standards include a Mode 0, 800, a Mode 1, 801 and a Mode 2, 802. Each mode includes a submode frame 803 which consists of 98 CD frames wherein each CD frame is 24 bytes. Accordingly, submode frame 803 consists of 2353 bytes. Each mode includes a synchronization section 805 which consists of the first 12 bytes.

The remaining 2340 bytes is a range 804 available for scrambling and layered ECC operations are performed. In each Mode, the next 4 bytes are used for header information in a header section 806.

In Mode 0, 800, sections 807 and 808 are not used for data. In Mode 1, 801, a section 809 consisting of 2048 bytes is used for data. Mode 1, 801, further includes an EDC section 810 consisting of 4 bytes, a zero section 811 consisting of 8 bytes, a P parity section 812 consisting of 172 bytes and a Q parity section consisting of 104 bytes. Mode 2, 802, further includes a data section 814 consisting of 2336 bytes.

For the digital data mode of Mode 1, 801, ECC operations, which are specific to CD-ROMs, are used to improve bit error rates to a level usable by computers. In CD-ROMs, the digital data contents differ from audio signals. where the dab tends to be more random. There is a greater probability that the same data can continue over a long period Thus, the scrambling in CD-ROMs is performed to equalize the power spectrum of the signal after modulation.

The scrambling is in a standard format. The 2340 bytes in the range 804, not including the synchronization signals 805, are XORed, that is - operated with an exclusive-or operator - with a changing 15-bit feedback shift register (starting with an initial value of 000000000000001). In this case, the encryption key is the "XOR" operation.

The digital data that has been scrambled with this method is put through the CIRC and EFM encoder as in a CD. This completes the formation of a master for a CD-ROM. The master is then duplicated to produce copies.

In addition to these formats, there is also a recordable Compact Disc format known as the Orange Book Standard. This standard allows personal CD-ROMs to be created using a standard personal computer with a CD-ROM recorder, thus allowing CD-ROMs to be written with operations similar to desktop publishing production. CD-ROMs with limited recording capabilities are used according to the standards set forth in the Orange Book standards The Orange Book Standards include a Part I for Compact Disc - Magneto Optical "CD-MO" discs and a Part II for Compact Disc - Write Once "CD-WO" discs.

The procedures involved are simple, and the user can record a CD-ROM in much the same manner as copying a floppy disk. A representative format of this type of CD-ROM is the Photo CD from Kodak Corp., which uses a multi-session format allowing data to be written as many times as necessary as long as space is available.

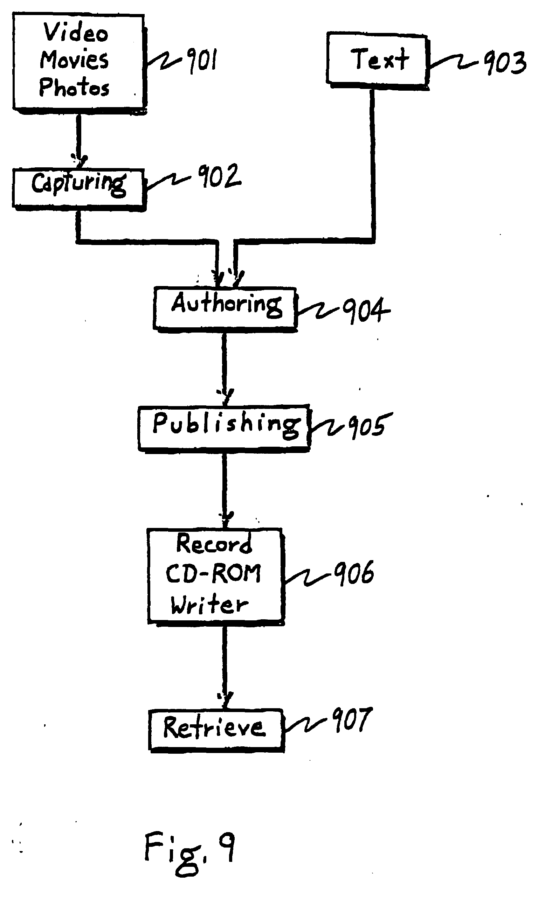

Referring to Fig. 9, there is shown the steps involved in production of a personal CD-ROM. In the case of electronic books and the like for individual publication, a image data 901 from video movies or photographs are captured 902 by an image processing application and compressed with an encoding method such as JPEG. The text portion 903 of the data is prepared on a word processing application or the like. An authoring application 904 (an application for editing) is used to perform layout editing, and edited files are composed. These files are then prepared for recording (at this point no further editing can be performed) in a publishing step 905.

Once the files have been prepared for recording, the contents of the files are recorded in step 906 to a CD-R mounted on a CD-ROM writer using a recording application such as, for example, "ISO9660 FileAccess". This results in the creation of a CD-ROM having a format based on the Yellow Book standards shown in Fig. 8. Similarly, it is also possible to create music CDs using a CD-R.

When CD-ROMs are created using a CD-R in this way, it is possible, although not simple, for the user to freely select a scrambling method to scramble the data. An easier method is to lock a published file through the use of a password, thus preventing a third party from illegally copying the data without knowing the password. However, it is not a difficult matter to determine a simple password. Therefore, password blocks are not considered high security encryption methods.

In the prior art relating to CDs described above, data is scrambled by a simple rearrangement of data. However, the main objective of this scrambling is to provide improved error correction, not to provide high security, through the lengthening of the interpolation distance, Thus the encryption method used in the scrambling can be easily decoded, and this scrambling method does not effectively serve to actively protect the security of the data from unauthorized access.

Furthermore, in the prior art relating to CD-ROMs, the data contents are scrambled using an XOR encryption method. However, the scrambling is a form of signal processing for increasing the reliability of data by improving the bit error rate, with the main objective being to equalize the power spectrum of the modulated signal. Among encryption methods, the XOR encryption method is relatively simple, and is unsuited for active security protection of recorded data from unauthorized access.

Furthermore, in the prior art relating to CD-Rs for personal CD-ROMs, the recording process is still entirely dependent on existing recording applications. Thus, the security protection offered in CD-Rs is limited to the restriction of access to a published file through the use of a password With only password protection, it is possible to a limited extent to prevent third parties from illegally copying data, but the security of the data contents of a CD-ROM cannot be maintained once the data has been published because the entire data file can be copied regardless of the readability of the data therein.,

Furthermore, even beyond the purely technical data protection problems described above, new problems are being posed by the transition to digital recording media that has been taking place recently. One particularly troublesome issue is the infringement of copyrights, secondary copyrights, and the like in recorded material - that is, the intellectual property aspects of data protection.

When the use of analog recording media such as cassette tapes and video tapes was widespread, the unauthorized copying and dubbing of protected material was not so advantageous, The sound and image quality of such unauthorized copies were limited because of the signal deterioration that inherently accompanies each round of copying or dubbing by analog techniques. However, with digital recording, there theoretically is no decrease in sound and image quality due to signal deterioration. Thus, the audio, video, and digital data contained in CDs, MDs, CD-ROMs, laserDISCS, and digital tapes can be copied to DATs, DCCs, and recordable MOs, and the data can then be used to create CDs and CD-ROMs without any loss of data.

In consideration of the impact this has on copyrights, the SCMS (Serial Copy Management System) was introduced for DCCs, DATs, MDs, and the like. The SCMS provides a limited restriction to copying by using a prohibition flag to allow only one generation of digital copies to be made. On the other hand, there are also proposals to add a royalties system to digital recordings through the addition of copyright compensation in the form of a surcharge on the retail price of hardware and software. However, neither of these methods have achieved full acceptance.

Furthermore, because digital recording devices provide such high quality, software publishers who hold copyrights have been strongly opposed to digital copying, and there have been numerous problems resulting from their opposition. Partially because of these reasons, DATs have still not gained wide acceptance. With CD-Rs for home use, friction with copyright holders' groups have come to the surface and may lead to a reenactment of the failure of the DAT to gain wide usage.

However, these are problems that face all digital recording media, regardless of whether they comprise audio, video, or digital data. Thus, the current situation is that it has been difficult to reach an agreement for an effective and useful method for regulating the protection of copyrights, including the collection of copyright licensing fees.

These exact same problems are faced by the CD-compatible DVD (Digital Video Disc). For now, agreement has been reached for sales of movie DVDs that allow playback only, with the use of the SCMS copy protection system to prevent unrestricted copies. One DVD format, the rewritable DVD-RAM, based on the PD recording method, would allow users to freely copy data. However, the release of DVD-RAM is not likely to occur until there is a complete agreement between the software publishers and the hardware manufacturers, as described above. With the current state of conflicting interests, according to one DVD maker, this may not take place at least until the year 2000. Thus, while movie DVDs and DVD-ROMs may move forward to some extent, there is no guarantee for the development of rewritable DVDs. As of the present, the situation is that, at least for the fundamental protection issues, almost nothing has been resolved.

### OBJECTS AND SUMMARY OF THE INVENTION

The object of the present invention is to overcome the limitations of the prior art.

It is an object of the present invention to provide a recording medium with copyright protection features that can prevent illegal copying of CD-DAs based on the Red Book standards and that can protect copyrights and reliably collect copyright licensing fees.

It is an object of the present invention to provide a recording medium with copyright protection features that can event illegal copying of CD-ROMs based on the Yellow Book standard and that can protect copyrights and reliably collect copyright licensing fees.

It is an object of the present invention to provide a recording medium with copyright protection features that can prevent illegal copying of CD-Rs based on the Orange Book standard and that can protect copyrights and reliably collect copyright licensing fees.

It is an object of the present invention to provide a recording medium with copyright protection features that can prevent illegal copying of CD-Is and CD-ROM/XAs based on the Green Book standard and that can protect copyrights and reliably collect copyright licensing fees.

It is an object of the present invention to provide a recording medium with copyright protection features that can prevent illegal copying of movie data on DVDs, in which movie video images are recorded with MPEG-2 compression and audio is recorded using AC-3 compression (for NTSC). A further object is to protect copyrights and reliably collect copyright licensing fees.

It is an object of the present invention to provide a recording medium with copyright protection features that can prevent illegal copying of data on DVD-ROMs, which are used as computer storage devices having large storage cavity while maintaining compatibility with CD-ROMs and other formats in the DVD group. A further object is to protect copyrights and reliably collect copyright licensing fees.

It is an object of the present invention to provide a recording medium with copyright protection features that can prevent illegal copying of data on DVD-RAMs, which are rewritable media using phase change recording and playback, and which are compatible with other formats in the DVD group. A further object is to protect copyrights and reliably collect copyright licensing fees.

It is an object of the present invention to provide a recording medium with copyright protection features that can prevent illegal copying of data on DVD-Rs, which can be recorded on just once and cannot be rewritten, and which are compatible with other formats in the DVD group. A further object is to protect copyrights and reliably collect copyright licensing fees.

It is an object of the present invention to provide a recording medium with copyright protection features that can reliably incorporate effectively a multiplicity of encryption methods for the scrambling of data.

In order to achieve the objective described above, the present invention in one embodiment applies to CDs following the Red Book specifications, wherein audio signals are quantized - that is, digitized and grouped into tracks according to a standardized Red Book format. In this embodiment, CIRC error correction operations are performed on the quantized signals, and subcode channels P and Q are used to index the beginning of tracks. According to the present invention,, when a signal is recorded, a specific scrambling method is used, and a copy-protection code mark is printed in the lead-in region. The code mark comprises a geometric box code that identifies the type of scrambling that was used.

According to this embodiment, the geometric box code serving as the copy protection code mark displays the scrambling method used in the CD, as well as whether or not the contents are copy protected.

According to an embodiment of the present invention, when a CD is played back, the copy protection code mark is read in and the scrambling method used is identified. The digital signal is decoded with the descrambler using the identified appropriately corresponding scrambling method. This decoded signal is combined with a newly generated copy protection signal and the resulting signal is sent to the output. If the data is to be converted to an analog audio signal and played back, the copy protection signal is ignored and playback is performed.

According to this embodiment of the present invention, when a CD is played back, the geometric box code that serves as the copy protection code mark reads the scrambling method used on the CD to decode the contents. The resulting signal is combined with the copy protection signal and outputted.

According to another embodiment of the present invention, copy protection code marks indicating a scrambling method are printed on recording media, such as CD, disks, and digital tapes, on which copyright licensing fees have already been added. When a CD is to be played back, the playback device checks to see if the copy protection signal should be included with the output signal. If the copy protection signal should be included, the recording medium to serve as the copy destination is checked to see if it is marked with the copy protection code mark. Copying is allowed only if the appropriate mark is present.

According to this embodiment, a user trying to copy the contents of a CD which is protected from illegal copying will only be able to copy the data if the copyright licensing fees have been paid. Assurance of compliance is achieved by checking for the presence of an appropriate copy protection code mark, which indicates that copyright licensing fees have been paid for and thus, the recording medium can legitimately serve as the copy destination. If the copy to be made is illegal, the appropriate copy protection code is absent and the user is unable to make the copy.

According to an embodiment of the present invention, when signals are being recorded during the copying process, such recordings are made by a process that includes scrambling the data according to the scrambling method printed on the copy destination recording medium.

According to this embodiment, it is possible to accurately match the copy protection code mark and the scrambling method used in the data on the disk when a newly copied recording medium is played back or when a second-generation copy is being made.

According to another embodiment of the present invention, the copy protection signal described above comprises a signal in a subcode having a specific number of bits.

According to this embodiment, it is possible to easily playback copied media.

The present invention according to another embodiment applies to CD-ROMs that follow the Yellow Book standards, with one block of data comprising 2352 bytes serving as a minimum unit for reading and writing data, and with the a bit error rate on the one level as a computer. According to the present invention, a specific method for scrambling is used when data is written. A copy protection code mark is printed near the lead-in position to indicate the type of scrambling used. The copy protection mark comprises a geometric box code.

According to this embodiment, the geometric box code serving as the copy protection code mark would be able to indicate the type of scrambling used on the CD-ROM as well as whether copying is prohibited.

According to another embodiment of the present invention, when data is read from a CD-ROM, the copy protection code mark is read and the type of scrambling used on the disk is identified, The data on the disk is descrambled according to the identified scrambling method, and the resulting digital data is combined with a newly generated copy protection signal based on the copy protection code. When the user data is being retrieved, the copy protection signal is ignored during the reading of data.

According to this embodiment, when data is to be read from a CD-ROM, the printed geometric box code serving as a copy protection code mark is used to identify the type of scrambling used on the disk, and the identified scrambling method is used to decode the data. This signal is combined with a copy protection signal and then output.

According to an embodiment of the present invention, when the contents of a CD-ROM are to be copied, a copy protection code mark indicating the type of scrambling used is printed beforehand on a recording medium, such as a CD-ROM, a disk, or a digital tape, for which copyright licensing fees have already been added as a surcharge. The output signal of the contents to be copied is checked to see whether it includes the copy protection signal. If the copy protection signal is included, the recording medium serving as the copy destination is checked to see whether a copy protection code mark is printed or not. If the mark is present, copying is allowed.

According to this embodiment, when a data from a CD-ROM for which illegal copying is prohibited is to be copied, the presence of a copy protection code mark printed on the destination recording medium is checked to determine whether the copyright licensing fees for the medium has been paid or not. If the copyright licensing fees have been paid, then copying is permitted. If the copying is illegal, it is prevented.

According to an embodiment of the present invention, when the contents of a CD-ROM is to be copied, the type of scrambling indicated by the mark printed on the destination recording medium is used to scramble the data to be recorded.

According to this embodiment, when a recording medium newly created through copying is to be read or copied, it is possible to accurately match the printed copy protection code mark and the type of scrambling used in the data contained in the disk.

Another embodiment of the present invention applies to recordable CDs based on the Orange Book standards, such as single-session CD-Rs and multi-session Photo CDs. During the recording of data, a specific type of scrambling is performed when writing the data. A geometric box code serving as a copy protection code mark, identifying the type of scrambling that was used, is printed near the lead-in area.

According to this embodiment, the geometric box code serving as the copy protection code mark is used to indicate the type of scrambling used in the data on the CD-R as well as whether or not copying is prohibited.

According to another embodiment of the present invention, when data is to be read from a CD-R, the copy protection code mark described above is read to determine the type of scrambling used. The identified scrambling method is used to decode the data and the resulting signal is combined with a copy protection signal that is newly generated based on the copy protection code. When data is to be retrieved without copying, the newly generated copy protection signal is ignored.

According to this embodiment, when data is to be read from a CD-R, the copy protection code mark printed on the disk allows the type of scrambling used to be identified and the data can be decoded, combined with the copy protection signal and outputted.

According to a embodiment of the present invention, when the contents of a CD-R is to be copied, the destination recording medium such as another CD-R, the same CD-R, a disk or a digital tape, is printed with a copy protection mark that indicates the type of scrambling to be used. The presence of the mark indicates that copyright licensing fees have already been paid as a surcharge on the recording medium. It is determined whether the output signal should include the copy protection signal or not, and if the copy protection is to be included, whether or not the copy protection code mark is printed on the destination recording medium. Copying is permitted only if the mark is present on the destination recording medium.

According to this embodiment, when data is to be copied from a CD-R that is protected from illegal copies, it is determined whether the copyright licensing fees for the destination recording medium have been paid or not by checking for whether a copy protection code mark is printed on the disk. If the copyright licensing fees have been paid then the copying of data is allowed, thus illegal copying is prevented.

According to another embodiment of the present invention, when the contents of a CD-R are to be copied, the type of scrambling indicated by the mark printed on the destination recording medium is used to scramble the data to be recorded.

According to this embodiment, when a newly copied CD-R is to be read or when a second-generation copy is to be made, it is possible to accurately match the type of scrambling used by the data contents on the disk to the copy protection code printed on the disk.

The present invention according to another embodiment applies to Compact Disc Interactive "CD-I" which follow the Green Book standards, and CD-ROM/XA which follows an extension of the Yellow Book standard, and allow the storage of moving images such as video movies and the like by using MPEG compression. When image data is to be written, a specific type of scrambling is performed on the data, and a geometric box code serving as a copy protection code mark is printed near the lead-in area to identify the type of scrambling used on the disk.

According to this embodiment, the geometric box code serving as a copy protection code can be used to identify the type of scrambling used on the CD-I or CD-ROM/XA disk as well as to identify whether or not copying is prohibited.

According to a embodiment of the present invention, when image data is read from a CD-I or a CD-ROM/XA disk, the copy protection code mark is read and the type of scrambling that is used on the disk is identified. The identified type of scrambling is then used to descramble the image data. The resulting signal is combined with a copy protection signal newly generated based on the copy protection code. When the image data is retrieved and viewed, the copy protection signal is ignored, thus not affecting the image's quality.

According to this embodiment, when data is to be read out from a CD-I or CD-ROM/XA disk, the copy protection code mark printed on the disk is used to determine the type of scrambling used. The data is then decoded, combined with the copy protection signal, and outputted.

According to another embodiment of the present invention, when copying image data from a CD-I or a CD-ROM/XA disk, a copy protection mark indicating the type of scrambling to be used is printed on a destination recording medium for which copyright licensing fees have already been paid as a surcharge on the price of the medium. The output image signal is checked to see if it contains a copy protection signal. If a copy protection signal is included, then the destination recording medium is checked to see if a copy protection code mark is printed or not. Copying is permitted only if the code mark is present.

According to this embodiment, when data is to be copied from a CD-I disk or a CD-ROM/XA disk for which only certain authorized copying is allowed, the destination recording medium is checked for the presence of a copy protection code mark to see whether copyright licensing fees have been paid or not. If copyright licensing fees have been paid, the copying is permitted, and if the copying is illegal, it is prohibited.

According to yet another embodiment of the present invention, when image data is to be copied from a CD-I disk or a CD-ROM/XA disk, the type of scrambling used on the destination recording medium is printed on the destination recording medium. The indicated type of scrambling is used to perform scrambling when writing data.

According to this embodiment, when data is to be read or a second-generation copy is to be made from a newly copied CD-I disk or CO-ROM/XA disk, it is possible to accurately match the type of scrambling used on the contents of the disk with the copy protection code mark printed on the disk.

The present invention according to another embodiment, applies to DVD disks in which two layers of disks, are fixed together. DVD's are the same size as CDs, to maintain compatibility. DVD disks mainly contain movie images compressed with Moving Pictures Experts Group 2 "MPEG-2" compression and audio compressed through AC-3 for NTSC. In the present invention, when data is to be recorded, a specific type of scrambling is performed and a geometric box code serving as a copy protection code mark identifying the type of scrambling used is printed on the inner perimeter, outer perimeter, or the outer perimeter surface of the disk.

According to this embodiment, the geometric box code serving as a copy protection code mark can indicate the type of scrambling used on the DVD disk and whether or not copying is prohibited.

According to an embodiment of the present invention, when a DVD disk is to be played back, the copy protection code mark described above is read and the type of scrambling used on the disk is identified. The identified type of scrambling is used to descramble the digital data. The data is combined with a copy protection signal that is newly generated based on the copy protection code, and the result is output. When the data is to be played back on a monitor, the copy protection signal is ignored during such playback.

According to this embodiment, when a DVD disk is to be played back, the copy protection code mark printed on the disk is used to identify the type of scrambling used on the disk and allows the decoded data to be combined with a copy protection signal to form the output signal. The data can nevertheless be played back freely on a monitor.

According to another embodiment of the present invention, when the contents of a DVD disk are to be copied, a copy protection code mark indicating the type of scrambling used on the disk is printed beforehand on a copy destination medium for which copyright licensing fees have already been paid as a surcharge on the price of the medium. The output signal described above is checked to see whether it contains a copy protection signal. If a copy protection signal is included, the copy destination medium is checked to see if a copy protection code mark is printed or not. Copying is permitted only if the mark is present on the disk.

According to this embodiment, when the contents of a DVD for which only certain authorized copying is allowed are to be copied, the copy destination medium (a blank disk or the like) is checked for the presence of a copy protection code mark to see if copyright licensing fees have already been paid as a surcharge on the price of the medium. If the copyright licensing fee has been paid, then the copying of the contents is permitted, but illegal copying is prevented.

The present invention according to another embodiment, applies to DVD-ROMs for computers DVD-ROMs are made of two disks, having the same size as a CD-ROM to maintain compatibility, fixed together to provide more than ten times the storage capacity of CD-ROMs. When data is to be written to a DVD-ROM disk, a specific type of scrambling is performed to write the data, and a geometric box code serving as a copy protection code mark in printed on the outer perimeter, inner perimeter, or the outer perimeter surface of the disk to indicate the type of scrambling used on the disk.

According to this embodiment, the geometric box code serving as the copy protection code mark indicates the type of scrambling used on the data in the DVD disk as well as whether copying is prohibited or not.

According to an embodiment of the present invention, when data is to be read from a DVD-ROM disk, the copy protection code mark is read off the disk to identify the type of scrambling used. The identified type of scrambling is used to descramble the digital data, which is then combined with a newly generated copy protection signal based on the copy protection code. When data is to be read, the copy protection signal is ignored.

According to this embodiment, when data is read from a DVD-ROM, the copy protection code mark printed on the disk is read to determine the type of scrambling used. The data is then decoded, combined with a copy protection signal, and outputted. The reading of the data can be performed without hindrance.

According to an embodiment of the present invention, when the contents of a DVD-ROM are to be copied, a copy protection code mark indicating the type of scrambling to be used is printed beforehand on the copy destination medium, for which copyright licensing fees have already been paid as a surcharge on the price of the medium. The output signal described above is checked to see whether it contains a copy protection signal. If a copy protection signal is included, the copy destination medium is checked to see if the copy protection code mark described above is printed thereon. Copying is permitted only if the code mark is printed thereon.

According to this embodiment, when the contents of a DVD-ROM disk for which only certain authorized copying is allowed is to be copied, the copy destination medium is checked for the presence of a copy protection code mark to see whether or not copyright licensing fees have been paid or not. If copyright licensing fees have been paid, copying is permitted, thus illegal copies are prevented.

The present invention according to another embodiment applies to DVD-RAMs, which are rewritable using phase difference recording and playback methods and which are compatible with other DVD media. When data is to be written, a specific type of scrambling is performed on the data, and a geometric box code serving as a copy protection code mark is printed on the inner perimeter, outer perimeter, or the outer perimeter surface of the disk to indicate the type of scrambling used on the disk.

According to this embodiment, the geometric box code serving as the copy protection code mark indicates the type of scrambling used in the DVD-RAM disk as well as whether copying is prohibited or not.

According to another embodiment of the present invention, when reading data from a DVD-RAM disk, the copy protection code mark described above is read from the disk to identify the type of scrambling used. The identified scrambling type is used to descramble the data, the decoded digital signal is combined with a newly generated copy protection signal based on the copy protection code, and the resulting signal is output. When data is to be retrieved, the copy protection signal is ignored - thus, data is not compromised by the protection.

According to this embodiment, when data is to be read from a DVD-RAM disk, the copy protection code mark printed on the disk is used to identify the type of scrambling used. The data is decoded, combined with a copy protection signal, and outputted. Thus, the reading of data can be performed with no hindrance.

According to an embodiment of the present invention, when copying the contents of a DVD-RAM disk, a copy protection code mark indicating a specific type of scrambling is printed on the copy destination medium, for which copyright licensing fees have been paid as a surcharge to the cost of the medium. The output signal described above is used to determine whether a copy protection signal is contained or not. If a copy protection signal is contained, the copy destination medium is checked to see whether or not the copy protection code mark described above is printed. Copying is permitted only if the appropriate code mark is printed.

According to this embodiment, when copying the contents of a DVD-RAM disk for which only certain authorized copying is allowed, the presence of a printed copy protection code mark is checked to see if copyright licensing fees have been paid for the copy destination medium. If copyright licensing fees have been paid, the contents can be copied, thus illegal copies are prevented.

The present invention according to another embodiment applies to DVD-R disks, Such DVD-R discs maintain compatibility with CDs, DVD-ROMs, and DVD-RAMs, and can be recorded to once but cannot be rewritten on. When data is to be written to a DVD-R disk, a specific form of scrambling is performed, and a geometric box code serving as a copy protection code mark identifying the type of scrambling used is printed on the inner perimeter, outer perimeter, or the outer perimeter surface of the disk.

According to this embodiment, the geometric box code serving as the copy protection code mark indicates the type of scrambling used on the data on the DVD-R disk and also whether or not copying is prohibited.

According to an embodiment of the present invention, when data in to be read from a DVD-R disk, the copy protection code mark described above is read and used to identify the type of scrambling performed. The identified type of scrambling is used to descramble the data, the decoded data is combined with a copy protection signal newly generated based on the copy protection code, and the resulting signal in output. When data is to be read, the copy protection signal is ignored.

According to this embodiment, when data is to be read from a DVD-R disk, the copy protection code mark printed on the disk serves to identify the type of scrambling used on the disk. Based on the identified type of scrambling, the data in decoded, combined with a copy protection signal, and outputted.

According to another embodiment of the present invention, when the contents of a DVD-R disk are to be copied, a copy protection code mark indicating the type of scrambling used is printed beforehand on the copy destination medium for which copyright licensing fees have already been paid as a surcharge on the price of the medium. The output signal described above is checked to see if it includes a copy protection signal or not. If a copy protection signal is included, the copy destination medium is checked to see whether a copy protection code mark in printed thereon or not. Copying is permitted only if the mark is printed thereon.

According to this embodiment, when the contents of a DVD-R for which only certain authorized copies are allowed are to be copied, the copy destination medium is checked for the presence of a copy protection code mark to see whether copyright licensing fees have been paid or not. If copyright licensing fees have been paid, the contents of the disk can be copied, thus illegal copies are prevented.

According to an embodiment of the present invention, the type of scrambling described above comprises secret key encryption methods such as password encryption, transposition encryption, secret-key encryption methods such as DES encryption, and public-key encryption methods such as RSA encryption.

According to this embodiment, almost any encryption method can be used to scramble data. The limits are determined by processing capabilities of the processors.

Briefly stated, a copy protected recording medium comprises a readable medium containing dam encrypted according to at last one encryption method. A geometric box code identifying the encryption method or methods used is associated with the readable medium by, for example, printing the geometric code onto the medium. The geometric code comprises at least one planer geometric figure formed by a plurality of lines, each of the lines encoding a bit of data by being either in an unbroken continuous state or in a broken discontinuous state, where each of the broken and the unbroken states correspond to one of the standard on/off digital states.

According to an embodiment of the present invention, a copy protected recording medium comprises a readable medium containing data encrypted according to at least one encryption method, and a geometric box code identifying the at least one encryption method.

According to another embodiment of the present invention, a method of protecting a recording medium from unauthorized copying, the method comprise the steps of encrypting data to the recording medium by a first at least one encryption method to form a recording medium with encrypted data, marking the recording medium with a first geometric box code identifying the first at least one encryption method, and causing a reading device to read the first geometric box code in order to apply the at least one encryption method to de-encrypt the encrypted data.

According to another embodiment of the present invention, a system of media with copyright protection comprises a readable medium containing data encrypted according to at last one encryption method, a status code associated with the resadable medium identifying the at least one encryption method and identifying the copyright protection status of the readable medium, a recordable medium, and a copy protection code mark on the recordable medium effective to cause a recording device to record to the recordable medium only if there is a correlating relationship between the copy protection code mark and the status code.

The above, and other objects, features and advantages of the present invention will become apparent from the following description read in conjunction with the accompanying drawings, in which like reference numerals designate the same elements.

### BRIEF DESCRIPTION OF THE DRAWINGS

Fig. 1(a) is a top view drawing showing the structure of a recording medium with copyright protection features according to an embodiment of the present invention.
Fig. 1(b) is a side view of the recording medium of Fig. 1(a).
Fig. 2 is a block diagram of a recording and reading device for the magnetic medium shown in Fig. 1.
Fig. 3 is a drawing of the hierarchical structure showing the types of scrambling that can use in the library section in Fig. 1.
Fig. 4(a) is a drawing of a geometric box code a shown in Fig. 1(a).
Fig. 4(b) is a drawing of a geometric box code as shown in Fig. 1(a).
Fig. 4(c) is a drawing of a geometric box code as shown in Fig. 1(a).
Fig. 5 is a drawing showing the structure of DVD devices according to another embodiment of the present invention.
Fig. 6 is a drawing showing the main elements in the signal processing system of a conventional CD.
Fig. 7 is a drawing for the purpose of describing the scrambling operation shown in Fig. 6.
Fig. 8 is a drawing showing the physical format of a conventional CD.
Fig, 9 is a drawing showing the steps involved in the production of a personal CD-ROM using a conventional CD-R.

### DETAILED DESCRIPTION OF THE PREFERRED EMBODIMENT

Referring to the drawings, the following is a description of an embodiment of the present invention.

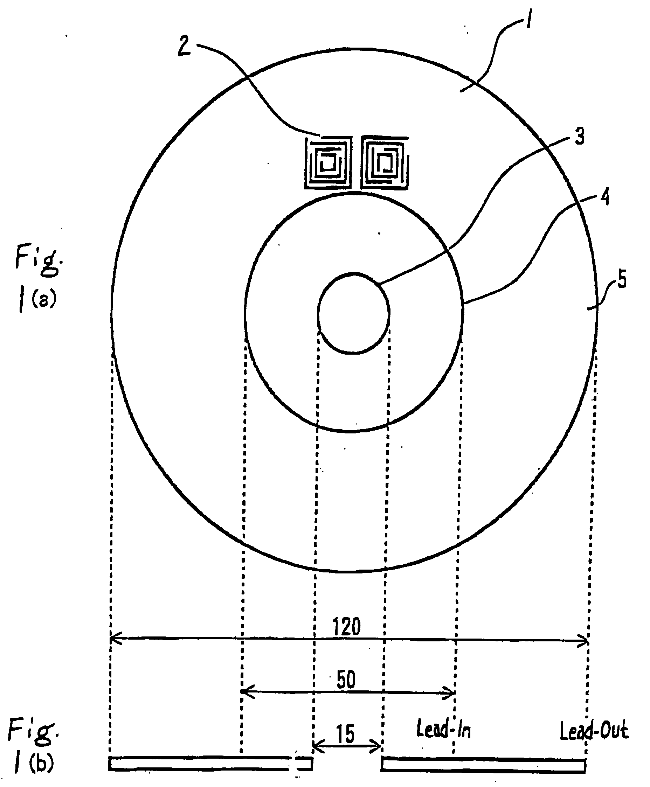

Referring to Fig. 1, there is shown a drawing of the structure of a recording medium with copyright protection features according to an embodiment of the present invention.

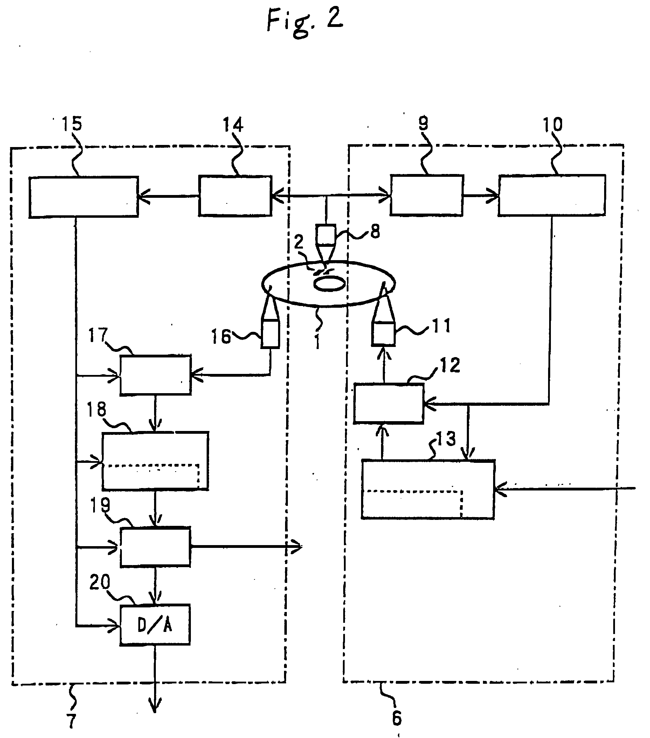

Referring to Fig. 2, there is shown a block diagram of a recording and reading device for the magnetic medium shown in Fig. 1.

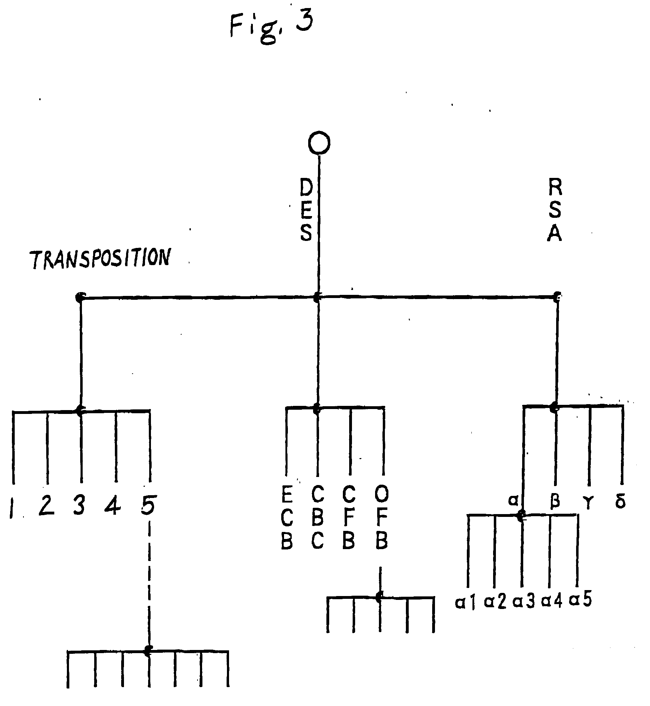

Referring to Fig. 3, there is shown a tree diagram of types of scrambling that can use in the "library" section in Fig. 2.

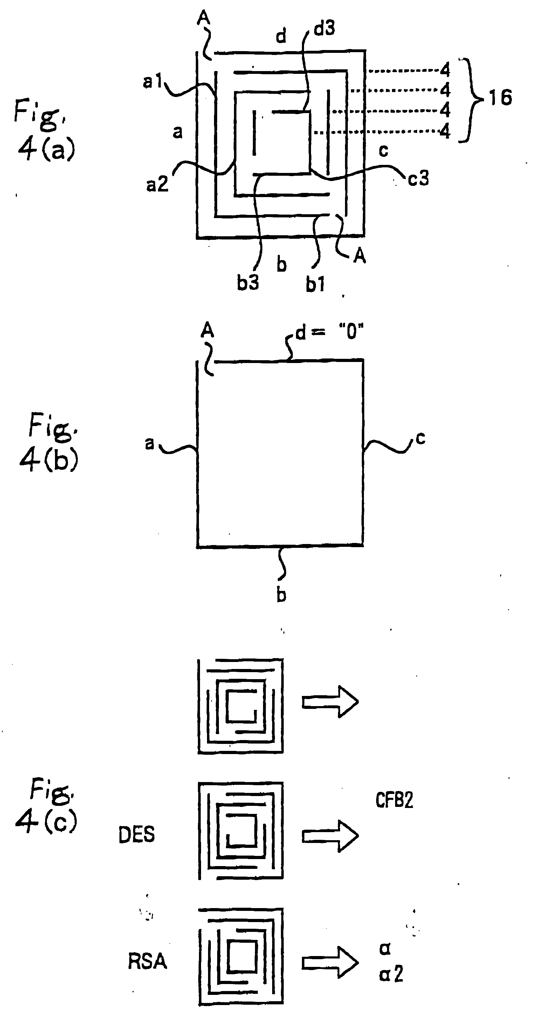

Referring to Figs. 4(a), 4(b), and 4(c), there are shown drawings for the purpose of describing the geometric box code shown in Fig. 1.

Referring to Figs. 1(a) and 1(b), there is shown a recording medium 1, which can be a CD, DVD, CD-ROM, CD-R, CD-ROM/XA, or the like. Referring to Fig. 1(a), there is shown a top-view drawing of a recording medium 1. Referring to Fig. 1(b), there is shown a side-view drawing of recording medium 1. There is also shown a copy protection code mark 2, in the form of a geometric box code, which indicates the type of scrambling that was used in scrambling the data on the disk.

Referring to the drawings, there is shown a hole 3 for mounting the CD and a lead in portion 4 and lead-out portion 5 at the start and end (CD) of where data is recorded. The printing position of copy protection code mark 2 can be inward (toward the inner perimeter) from the lead-in portion on the upper surface of the CD, outward (toward the outer perimeter) from the lead-out portion, or on the outer perimeter sub of the disk. It would also be possible to attach copy protection code mark 2 as a sticker. Code mark 2 should be positioned so that it cannot interfere with data operations and so that it can be easily detected and read. If the copy destination recording medium is a DAT or DCC digital tape, code mark 2 should be printed at a position on the surface of the tape case or the like where it can be easily detected and read.

Referring to Fig. 2, there is shown a recording device 6 for recording or writing data to a CD, CD-ROM, or the like. Code mark 2 printed on the upper surface of recording medium 1 is read with a read head 8 and the data is sent from a scramble type reading section 9 to a write control section 10. Read head 8 can be a separate head from a data reading head such as read head 16 or can be the same head. Code mark 2 sent to write control section 10 is compared with a library in a scramble section 13 to determine a scrambling method. The resulting type of scrambling is used by scramble section 13 to scramble the digital input data. A write section 12 performs CIRC and EFM operations and the like. The resulting digital data is written using a laser beam via a write head 11.

When data recorded on a recording medium 1 is read via a read/playback device 7, a read control section 15 compares the code mark read by read head 8 with the contents of a library in a decode section 18 in order to determine the type of scrambling used on recording medium 1. Data read by a read head 16 is processed through EFM demodulation, CIRC processing, and the like, and decode section 18 descrambles the signal according to the type of scrambling that had been determined. A synthesizer 19 generates a copy proteetion signal indicating the presence of a code mark by setting up flags in available space in R - W in subcode P - W. This copy protection signal is synthesized with the descrambled digital signal by synthesizer 19, and the resulting digital signal is outputted. For CDs, the digital signal can then undergo D/A conversion through a D/A converter 20, and an analog audio signal can be played back through a speaker.

Referring to Fig. 3, there is shown a drawing of an example of the various types of scrambling that may be stored in the library. The encryption methods that can be used in scrambling data can be divided up, for example, into transposition methods, DES methods, which is a secret key encryption method, and RSA, which is a public key encryption method.

The transposition method can be further subdivided into single-word transposition methods, using a single key, and more complex multiple-word transposition methods, using combinations of more than one key (the drawing shows examples of 2 - 5 keys. Each branch can be narrowed or elaborated further to provide a more detailed structure.

DES encryption uses a complex algorithm wherein 64-bit data blocks are encrypted with 56-bit keys. DES encryption can be broadly divided into ECB electronic code book encryption, CBC code block tuning, CFB code feedback, and OFB output feedback, and each of these can be further subdivided as well, as shown.

In RSA encryption, anyone can encrypt data since the encryption keys are public, but Euler's phi function is used in the encryption so that it is almost impossible to decode the data without knowing the decoding key. RSA encryption can be subdivided according to the prime numbers that are used.

Thus, the scrambling type library can include almost all the encryption methods currently being used. The types are stored in memory as a hierarchical structure so that searching is made easy. Additions and deletions can be easily made to the library.

The following is a description of one convenient system of correspondence between the type of scrambling used and the geometric box code. Other systems can be implemented using the data storage encoding capabilities of the geometric box code used in the present invention. Referring to Fig. 4 (a), there is shown the basic shape of the geometric box code used in the present invention. Four boxes of different sizes, each box comprising two pairs of parallel sides with each pair perpendicular to the other pair, are arranged concentrically to form one basic geometric code.

The outermost box comprises sides a, b, c, and d. The second box comprises sides a1, b1, c1, and d1. The third box comprises a2, b2, c2, and d2. The fourth box comprises sides a3, b3, c3, and d3. If each side segment is made to correspond to one bit, a single box would accordingly correspond to four bits, and one basic code comprising four boxes would accordingly be able to indicate sixteen bits.

Referring to Fig. 4(b), there is shown only the outermost box. If the presence of a cut A in a segment indicates a "0" and the absence of a cut indicates a "1", then it can be seen by examination that segment a = "1", segment b = "1", c = "1", d = "0". Accordingly, if the side segments are read in the order of abcd, the box shown would indicate the binary code "1110". Thus, this system provides a two-dimensional code that can represent numerical values, characters, symbols, or the like. Cut A in segment d can be positioned at the left, right, or center of the segment. It is apparent that any side segment can be disconnected by a cut positioned at either end, at the center, or at a position proximate to the ends or center.

Referring to Figs. 3 and 4(c), as an example of the type of information that might be coded by the geometric box code, the box code can be made to correspond to the scramble type hierarchy. In the box codes of Fig. 4(c), the outermost box can represent the main trunk, with a cut in segment d indicating the transposition method, a cut in segment b indicating the DES method, and a cut in segment a indicating the RSA method. The second box could correspond to the next layer of branches.

In the uppermost code in Fig. 4(c), segment d is cot, indicating the transposition method. The second box would correspond to the second branch. The cuts in segments a1 and c1 might, for example, indicate multiple-word transposition 5. Knowing that multiple-word transposition 5 is used only indicates that multiple words are used with a key count of five. Accordingly, the next branch corresponds to the third box (the subsequent branches are not shown in Fig. 3). Segment b2 in the third box is cut, so the resulting key would be "3 bytes + 2 blocks".

Specifically, this would man the first byte would be delayed by three bytes, the second byte would be delayed by one byte, the third byte would be delayed by two bytes, and so on. Byte units can be transposed according to the three keys "3", "1", and "2", and offset by "four blocks" and "five blocks" every two blocks, where one block is 15 bytes. Thus, transposition will take place using five composite keys.

Next, the branch corresponding to the fourth box is read. If a branch representing a one-block delay every five blocks is found, then this would be incorporated. If the next branch is searched for and not found - that is, no box is written, then this would complete the operation. Referring to Fig. 4(c), the uppermost geometric box code shown would be outputted as a copy protection code mark representing this type of scrambling.

The other DES and RSA types of encryption are configured in the same manner, with the segments of the geometric box code corresponding to the hierarchical branches of scrambling methods. As the number of branches increases, a single geometric box code might not be sufficient. In such cases, the number of geometric box codes can be increased to allow compact symbolic representation of the copy protection code.

Referring to Fig. 3, the search of the hierarchical diagram shown in the drawing is performed by generating an index from the pointers. The index portion is accompanied by a look-up table containing each branch and the corresponding geometric box code. This provides quick input and output of protection codes.

The following is a description of the operation of the present invention.

As described above, there are two proposed general ways for preventing illegal copying of recording media such as CDs. In the first, according to a restriction method, a copy protection flag such as SCMS is inserted into the software so that the copying device can detect the copy protection flag and not allow copying. The other method involves adding surcharges corresponding to the copyright royalties on to the sales price of both the software and the hardware, and then allowing users to freely make copies in accordance with the terms of the royalty agreement.

The former imposes restrictions on the freedom of the user; and the latter brings up the problem of how the surcharges are to be distributed. Thus, both methods have their advantages and disadvantages. However, this embodiment of the present invention allows both methods to be used with CDs. As an example, for DVD disks, this embodiment can allow a system of royalty surcharges that allow users to freely make copies.

Referring to Fig. 2, the following is a description of how the copyright protection operations of the present invention apply to CDs.

Copy protection code mark 2 uses a geometric box code printed on the upper surface of CD 1 to indicate copy protection as well as to indicate what type of scrambling is used on the disk. Code mark 2 is read by read section 14 via read head 8 and is sent to read control section 15.

Copy protection code 2 is read into read control section 15, which looks up the code in the library in decode section 18. Referring to Fig. 3, the hierarchical structure shown in the drawing is searched to determine the type of scrambling (multiple-word transposition 5, for example). The recorded digital data is read by read section 17 via read head 16, and EFM demodulation and CIRC operations are performed. Then, read control section 15 uses decode section 18 in order to descramble the data according to the type of descrambling determined above.

Next, synthesizer 19 generates a copy protection signal by setting flags in open spaces in subcode R - W. The copy protection signal is generated according to the copy protection code (type of scrambling) that was determined before i.e. according to the representation of bits from the geometric box code. The synthesizer combines the copy protection signal with the digital data so that: digital data + copy protection signal = digital output. If audio signals are to be played back, the signal is then sent through D/A converter 20 and played back through a speaker. In such cases, only the audio data would be extracted, and the copy protection signal would be ignored.

When a first-generation copy is to be made using the digital output which contains the copy protection signal from synthesizer 19, write control section 10 checks to see if a copy protection signal is included in the digital output. If it is, then the new CD, digital tape, or the like that serves as a recording (copying) medium is checked to see if copy protection code mark 2 is printed thereon. In other words, write control section 10 checks via read head 8 and read section 9 to see if copying is authorized because the copyright licensing fees have been paid on the new (copying) medium.

If the copyright licensing fees are determined to have been paid, copy protection code mark 2 is used to look up the library index in scramble section 13. The hierarchical structure is searched and the type of scrambling used is determined. Writing and recording is then allowed and the input of the digital signal to scramble section 13 is allowed. The type of scrambling determined from the printed code mark is used to apply the scrambling to the data. The copy protection signal is included, CIRC and EFM operations are performed and write section 12 records the data using write head 11. This completes the writing operation.

When the copy is made, a type of scrambling different from the type that was used for the original disk is selected. Once the first-generation copy is made, the destination medium would become a medium for which copyright licensing fees have not been paid. Therefore, the copy protection code mark that indicated, when the disk was new, that copyright licensing fees had been paid, is printed with an organic pigment or the like that melts when it is exposed to a laser beam during the first read operation. Thus, only a first-generation copy can be made. In this case, the use of a geometric box code mark is advantageous because after it has melted away, it is more difficult to read than lettering. There is no particular restriction on the type of geometric box code mark used to indicate that copyright licensing fees have ban paid as a surcharge. Any convenient standard can be agreed upon. It can be seen that the combinations of digits possible that is encoded by the geometric box code used in the present invention is very large.

Thus, copy protection code mark 2 of the medium which has been coped once is melted away. In the case of digital tapes and the like, if a second or later generation copy is attempted, write control section 10 would determine that license fees have not been paid and would not allow copying. Thus, unauthorized copying would be prevented. Furthermore, when a first generation copy is to be played back, the copy protection code mark would be gone but the copy protection signal in the subcode would remain. This signal can be used to determine the type of scrambling used ad the signal could be descrambled from there, so there is no difficulty in playing back the contents.

The description above covered the method for preventing copies when a SCMS system is used. If it is possible to add a surcharge for royalties, then a meltable pigment would not be used to print copy protection code mark 2, and instead a normal printing method would be used. This would allow free copying that is not restricted to only first-generation copies.

In the description above, the example of CDs were used to illustrate the operations involved in protecting copyrights, but similar operations will yield similar advantages for other recording media such as CD-ROMs, digital tapes, CD-ROM/XAs, and CD-Rs.

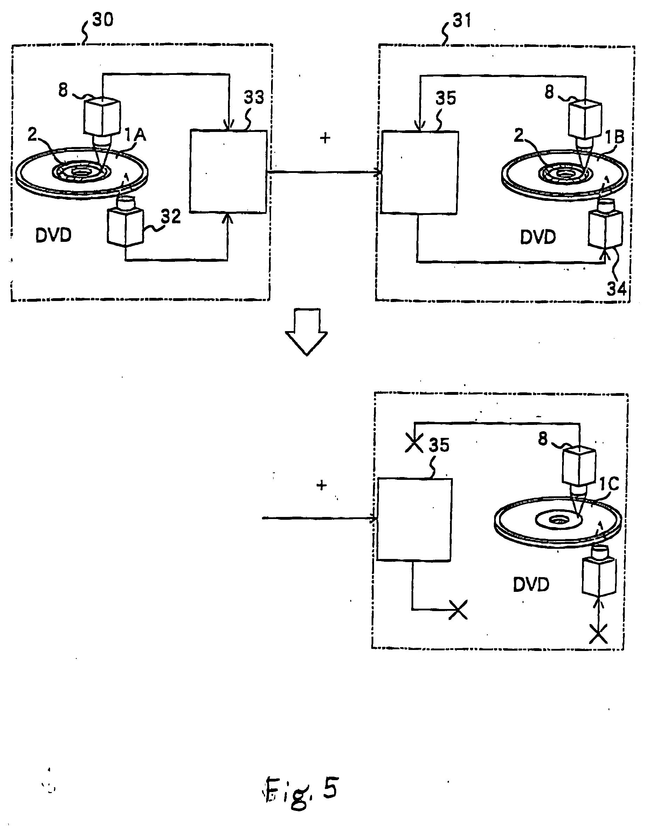

Referring to Fig. 5, there is shown a DVD configuration according to another embodiment of the present invention.

Referring to Fig. 5, a DVD 1A comprises a Digital Video Disc for recording video, which is formed by fixing two layers of CD, one to each other to expand storage space. Image signals are compressed using MPEG-2, and audio signals for NTSC formats are compressed using AC-3, in which five speakers can be used to provide a theater-quality surround sound audio playback (for PAL formats, MPEG-2 audio compression is used). The storage capacity is approximately thirteen times that of the CD. Compatibility with CDs is maintained by keeping the DVD disk at the same dimensions as the CD, as well as by using standards that are compatible. Referring to the drawings, there is shown a playback device 30 for playing back DVD 1A (a TV monitor not shown in the drawings is also included). There is also shown a recording device 31 for a DVD 1B.

In playback device 30, there is shown a copy protection code mark 2 In the form of a geometrical box code similar to that of CD 1. The code mark is printed with standard printing techniques rather than with meltable pigments. The printing position can be toward the inner perimeter of the disk, the outer perimeter of the disk, or the outer perimeter surface of the disk. The code mark indicates copy protection as well as the type of scrambling used on the data, i.e. the key. A read head 8 reads copy protection code mark 2, and a playback head 32 reads data from DVD disk 1A. Compared to CDs, DVD devices use laser beams with shorter wave lengths, providing higher density by decreasing the track pitch and the laser spot size by 30 percent. However, compatibility between CDs and DVDs is maintained by either using a two-lens pickup where one lens is selected during read operations, or by structuring a section of the DVD lens to serve as a CD lens so that one double-focus lens can read both DVDs and CDs.

A signal processor 33 is similar in its basic structure to read/playback device 7 shown in Fig. 2, but in the case of a DVD device, read control section 15 performs additional MPEG-2 decoding and AC-3 decoding operations such as reverse DCT and predictive memory operations. The output signal comprises the synthesis of the digital video and audio signal with a copy protection signal (or a copyright signal). During playback, audio signals as well as video signals are both outputted to the monitor.

In recording device 31, a record head 34 uses phase-change recording and playback technology rather than the conventional MO (magneto-optic recording) technology used for optical dish. Thus, there is no need for the use of the magnetic effect, and writing can be performed solely with a simple laser beam. A signal processing portion 35 is similar in its basic structure to that of write device 6 shown in Fig, 2. However, in the case of a DVD device, write control portion 10 uses write portion 12 and scramble portion 13 to perform additional MPEG-2 and AC-3 encoding through DCT and predictive memory operations, thus compressing and encoding the data when it is recorded.

The description above covers the general aspects of DVD disks. The DVD group to which the present invention in applicable includes: DVD-ROMs, which are used as computer storage devices and which have expanded capacities of 4.7 GBytes for single-layer disks and 8.5 GBytes for two-layer disks; movie DVDs, which use phase-change recording and playback technology to allow rewritable disks; DVD-RAMs, which are compatible with DVD-ROMs; and DVD-Rs, which use a meltable dye to allow just one recording operation and does not allow rewriting, and which can be used for testing programs and for home movies such as home videos, video movies, and the like.

The following is a description of the operations of the embodiment described above.

In the second embodiment described above, which applies to the DVD group, the situation is described where an adequate copyright licensing fee has been added as a surcharge beforehand.

In playback device 30, the digital audio/video signal read from copy source DVD 1A is combined with a copy protection signal, and the resulting signal is sent to recording device 31. When recording device 31 determines that a copy protection signal is present, read head 8 checks copy destination DVD 1B to see if copy protection code mark 2 is printed on the disk. If copy protection mark 2 is printed on the disk, then copyright licensing fees have been paid, so copies can be freely made as many times as needed.

In signal processing circuit 35, the combined signal to be used for copying is encoded, with the image data being encoded with MPEG-2, and the audio data being encoded with AC-3. The data is scrambled based on the key signal read by read head 8. Record head 34 records the data to DVD 1B using the phase-change method.

Referring to the lower portion of Fig. 5 indicated by an arrow, if copyright licensing fees have not paid on copy destination DVD 1C and no copy protection code mark 2 is printed on the disk, copying is not allowed since the key signal cannot be dated. Also, if a copy protection signal is not contained in the combined signal from playback device 30, then the disk is allowed to be copied. Other operations are performed according to the corresponding operations described in the previous embodiment, as shown in Fig. 2.

The above description covered the use of movie DVDs in copyright protection operations. Completely identical operations can be used to achieve the same effects for DVD-ROMs, DVD-RAMs, and DVD-Rs.

As described above, according to the present invention, a copy protection code mark, in the form of a geometric box code, is used to indicate the type of scrambling applied to the data on the disk, as well as to indicate that the medium does not permit copying or duplication. The geometric box code, which serves as a symbolic code, is printed on the disk. During the writing and reading of data, the geometric box code is used as a marker for evaluations in the operations performed. Thus, it is possible to have multiple types of scrambling prepared, from simple methods to difficult methods, so that the scrambling methods can be used selectively in accordance with the level of security required. Thus, a difficult scrambling method can be used to scramble data that needs to be very secure, and combinations of these scrambling methods can be used to make decoding even more difficult.

The copy protection code mark is used for both determining the type of scrambling used as well as to indicate that copyright licensing fees have been paid. Thus, illegal copies can he prevented to protect copyrights, and copyright licensing fees can be reliably collected. This provides uses with the ability to freely make copies without imposing restrictions.

Having described preferred embodiments of the invention with reference to the accompanying drawings, it is to be understood that the invention is not limited to those precise embodiments, and that various changes and modifications may be effected therein by one skilled in the art without departing from the scope or spirit of the invention as defined in the appended claims.

Although only a single or few exemplary embodiments of this invention have been described in detail above, those skilled in the art will readily appreciate that many modifications are possible in the exemplary embodiment (s) without materially departing from the novel teachings and advantages of this invention. Accordingly, all such modifications are intended to be included within the scope of this invention as defined in the following claims. In the claims, means-plus-function clauses are intended to cover the structures described herein as performing the recited function and not only structural equivalents but also equivalent structures, This although a nail and screw may not be **structural equivalents** in that a nail relies entirely on friction between a wooden part and a cylindrical surface whereas a screw's helical surface positively engages the wooden part in the environment of fastening wooden parts, a nail and a screw may be **equivalent structures**.

## Claims

1. A copy protected recording medium comprising:
a readable medium containing data encrypted according to at least one encryption method; and
a geometric box code identifying said at least one encryption method.

2. A copy protected recording medium according to claim 1, wherein said readable medium is a member selected from the group consisting of CD, CD-ROM, CD-ROM/XA, CDI, 3DO, PHOTO CD, KARAOKE CD, CD-R, DVD, DVD-ROM, DVD-RAM, DVD-R, DAT, LaserDISC, magnetic tape, floppy discs, hard discs, and M/O discs.

3. A copy protected recording medium according to clam 1, wherein said at least one encryption method includes at least one member of the group consisting of passwords blocking, transposition encryption, secret key encryption, and public key encryption.

4. A copy protected recording medium according to claim 3, wherein said secret key encryption includes DES.

5. A copy protected recording medium according to claim 3, wherein said public key encryption includes RSA.

6. A copy protected recording medium according to claim 1, wherein said geometric box code comprises at least one planer geometric figure formed by a plurality of lines, each of said lines encoding a bit of data, wherein
each of said lines has an unbroken continuous state corresponding to one of digit zero and digit one, and a broken discontinuous state corresponding to the other of said digit zero and said digit one.

7. A copy protected recording medium according to claim 6, wherein said planar geometric figure is a square.

8. A copy protected recording medium according to claim 7, wherein said geometric box code comprises at least one group of said squares in a concentric arrangement.

9. A method of protecting a recording medium from unauthorized copying, said method comprising the steps:
encrypting data to said recording medium by a first at last one encryption method to form a recording medium with encrypted data;
marking said recording medium with a first geometric box code identifying said first at last one encryption method; and
causing a reading device to read said first geometric box code in order to apply said at least one encryption method to de-encrypt said encrypted data.

10. A method of protecting a recording medium from unauthorized copying according to claim 9 further comprising the steps of
marking a copying medium with a second geometric box code; and
causing a recording device to only copy said de-encrypted data to said copying medium if said second geometric box code is in correlation with said first geometric box code.

11. A method of protecting a recording medium from unauthorized copying according to claim 9 wherein said step of causing a reading device to read includes a further step of musing said reading device to associate a second at least one encryption method with said de-encrypted data; and said method further including the steps of:
causing a recording device to copy with encryption of said de-encrypted data to a copying medium, said copying with encryption performed with said second at least one encryption method; and
marking said copying medium with a second geometric box code identifying said second at least one encryption method.

12. A method of protecting a recording medium from unauthorized copying according to claim 9, wherein said recording medium is a member selected from the group consisting of CD, CD-ROM, CD-ROM/XA, CDI, 3DO, PHOTO CD, KARAOKE CD, CD-R, DVD, DVD-ROM, DVD-RAM, DVD-R, DAT, LaserDISC, magnetic tape, floppy discs, hard discs, and M/O discs.

13. A method of protecting a recording medium from unauthorized copying according to claim 9, wherein said at least one encryption method includes at least one member of the group consisting of passwords blocking, transposition encryption, secret key encryption, and public key encryption.

14. A method of protecting a recording medium from unauthorized copying according to claim 13, wherein said secret key encryption includes DES.

15. A method of protecting a recording medium from unauthorized copying according to claim 13, wherein said public key encryption includes RSA.

16. A method of protecting a recording medium from unauthorized copying according to claim 9, wherein said geometric box code comprises at least one planer geometric figure formed by a plurality of lines, each of said lines encoding a bit of data, wherein
each of said lines has an unbroken continuous site corresponding to one of digit zero and digit one, and a broken discontinuous state corresponding to the other of said digit zero and said digit one.

17. A method of protecting a recording medium from unauthorized copying according to claim 16, wherein said planar geometric figure is a square.

18. A method of protecting a recording medium from unauthorized copying according to claim 17, wherein said geometric box code comprises at least one group of said squares in a concentric arrangement.

19. A method of protecting a recording medium from unauthorized copying according to claim 9 wherein said step of causing a reading device to reed includes a further step of causing said reading device to associate a second at least one encryption method with said de-encrypted data, wherein said associated second at least one encryption method does not affect analog form of said de-encrypted data but does affect a digital form of said de-encrypted data effective to prevent copying of said digital form of said de-encrypted data.

20. A method of protecting a recording medium from unauthorized copying according to claim 9 wherein said step of causing a reading device to read includes a further step of causing said reading device to associate a second at least one encryption method with said de-encrypted data, wherein code signals for said associated second at least one encryption method are placed at a site effective to not affect non-copying use of said de-encrypted data but effective to cause encryption of said de-encrypted data in a copying use of said de-encrypted data.

21. A method of protecting a recording medium from unauthorized copying according to claim 9 wherein said step of causing a reading device to read includes a further step of causing said reading device to associate a second at least one encryption method with said de-encrypted data; and destroying said first geometric box code.

22. A system of media with copyright protection comprising:
a readable medium containing data encrypted according to at least one encryption method;
a status code associated with said readable medium identifying said at least one encryption method and identifying the copyright protection status of said readable medium;
a recordable medium; and
a copy protection code mark on said recordable medium effective to cause a recording device to record to said recordable medium only if them is a correlating relationship between said copy protection code mark and said status code.

23. A system to claim 22, wherein said readable medium is a member selected from the group consisting of CD, CD-ROM, CD-ROM/XA, CDI, 3DO, PHOTO CD, KARAOKE CD, CD-R, DVD, DVD-ROM, DVD-RAM, DVD-R, DAT, LaserDISC, magnetic tape, floppy discs, hard discs, and M/O discs.

24. A system according to claim 22, wherein said at least one encryption method includes at least one member of the group consisting of passwords blocking, transposition encryption, secret key encryption, and public key encryption.

25. A system according to claim 24, wherein said secret key encryption includes DES.

26. A system according to claim 24, wherein said public key encryption includes RSA.

27. A system according to claim 22, wherein said status code is a geometric box code comprising at least one planer geometric figure formed by a plurality of lines, each of said lines encoding a bit of data, wherein
each of said lines has an unbroken continuous state corresponding to one of digit zero and digit one, and a broken discontinuous state corresponding to the other of said digit zero and said digit one.

28. A system according to claim 27, wherein said planar geometric figure is a square.

29. A system according to claim 28, wherein said geometric box code comprises at least one group of said squares in a concentric arrangement.
